# EUROPÄISCHE PATENTSCHRIFT

(11) **EP 1 940 637 B1**
(45) Veröffentlichungstag und Bekanntmachung des Hinweises auf die Patenterteilung: **27.07.2011**
(21) Anmeldenummer: 06805425.3
(22) Anmeldetag: 14.10.2006
(51) Int. Cl.: B60J 5/14

(54) **CABRIOLET-FAHRZEUG MIT ZUMINDEST DREI AUFEINANDER FOLGENDEN DACHABSCHNITTEN**
CABRIOLET WITH AT LEAST THREE CONSECUTIVE ROOF SECTIONS
VEHICULE CABRIOLET A AU MOINS TROIS SEGMENTS DE TOIT SUCCESSIFS

(30) Priorität: 18.10.2005 DE 102005049674
(43) Veröffentlichungstag der Anmeldung: 09.07.2008
(73) Patentinhaber: Wilhelm Karmann GmbH, 49084 Osnabrück (DE)
(72) Erfinder: BROCKHOFF, Franz-Ulrich, 49565 Bramsche (DE)
(74) Vertreter: Kronthaler, Schmidt & Coll.
(86) Internationale Anmeldenummer: PCT/DE2006/001812
(87) Internationale Veröffentlichungsnummer: WO 2007/045219

(56) Entgegenhaltungen:
- WO-A-2004/041571
- DE-U1- 29 924 707
- JP-A- 62 031 515
- JP-A- 2004 058 988

## Beschreibung

Die Erfindung betrifft ein Cabriolet-Fahrzeug mit einer hinteren, eine Heckscheibe umfassenden Dacheinheit, einem ersten, in geschlossener Dachstellung bezüglich der Fahrtrichtung diesem vorgeordneten Dachteil zumindest einer an das vorgeordnete Dachteil bei geschlossenem Dach in Fahrtrichtung anschließenden vorderen Dacheinheit nach dem Oberbegriff des Anspruchs 1 sowie ein zugehöriges Fahrzeugdach.

Es ist bekannt, Cabriolet-Fahrzeuge mit einer hinteren Dacheinheit, einem daran-vorgeordneten Dachteil und einer gegenüber diesem relativbeweglichen vorderen Dacheinheit auszubilden, insbesondere um damit Fahrzeuge mit großen Innenräumen und zwei oder mehr Sitzreihen hintereinander überbrücken zu können. Ein solches Fahrzeug ist in der DE. 299 24 707 U1 oder in JP 2004 405 8988 A offenbart. Die hintere Dacheinheit kann dabei gegenüber der Karosserie um eine Querachse derart abwärts verlagerbar sein, dass sie in abgelegter Stellung im wesentlichen horizontal liegt und mit der bei geschlossenem Dach dem Insassenraum zugewandten Seite nach oben zeigt. Das vorgeordnete Dachteil ist beim Öffnen um eine im Grenzbereich zwischen den Dachteilen gelegene zweite Querachse an die hintere Dacheinheit heranschwenkbar und liegt in geöffneter Stellung gegensinnig zu diesem orientiert. Eine vordere Dacheihheit liegt dann in geöffneter Dachstellung oberhalb des vorgeordneten Dachteils in gleicher Orientierung wie dieses. Um die Öffnungs- und Schließbewegung, ausgehend von der hinteren Dacheinheit, auch auf das vorgeordnete Dachteil und die vordere Dacheinheit zu vermitteln, sind an jeder Fahrzeugseite um Fahrzeugquerachsen gegeneinander schwenkbare Gestängeteile vorgesehen, wobei sich die Konstruktion aus Gestängeteilen und verbindenden Gelenken insgesamt von einem Hauptlager in der Karosserie bis in die Verbindungsbereiche zwischen dem vorgeordneten Dachteil und der vorderen Dacheinheit erstreckt. Die Gelenke öffnen dabei während der Dachbewegung zumindest teilweise nach Art von Parallelogrammen, wodurch sich im seitlichen Querrandbereich unterhalb der gewölbten Dachabschnitte ein großer Raumbedarf für die Gestängeteile in vertikaler Richtung ergibt. Dies schränkt die Kopffreiheit für die Insassen ein. Durch ihr Öffnen und Schließen gegeneinander sind zudem die Gestängeteile und Gelenke bei der Öffnung störend im Blickfeld, und es besteht Einklemmgefahr zwischen sich schließenden Lenkern dieser Gestängeteile. Des weiteren muss ein erheblicher Aufwand an Verkleidungen in der hinteren Dacheinheit und dem vorgeordneten Dachteil vorgesehen sein, um zumindest bei geschlossenem Dach zu vermeiden, dass die Gestängeteile sichtbar sind.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 16. Hinsichtlich vorteilhafter Ausgestaltungen der Erfindung wird auf die weiteren Ansprüche 2 bis 15 verwiesen.

Erfindungsgemäß ist dadurch, dass zumindest die Relativbewegung der vorderen Dacheinheit(en) über eine oder mehrere drehbare Welle(n) bewirkbar ist, die Zahl von sich um Fahrzeugquerachsen öffnenden oder schließenden Gelenken verringert. Einer Klemmgefahr ist damit vorgebeugt, insbesondere unterhalb des vorgeordneten Dachteils. Die Welle(n) kann oder können dicht unterhalb des jeweiligen Dachabschnitts liegen, so dass sie auch optisch verdeckt sind und die Kopffreiheit nicht einschränken. Auch bei der Dachbewegung treten keine Teile dieser Wellen nach unten in das Blickfeld hervor.

Diese Vorteile sind auch für die Bewegung des vorgeordneten Dachteils gegenüber der hinteren Dacheinheit erzielbar, wenn zusätzlich auch zur Bewirkung des Heranbewegens des vorgeordneten. Dachteils an die hintere Dacheinheit zumindest eine entsprechende Welle vorgesehen ist, die bei geschlossenem Dach zumindest eine Komponente in Fahrtrichtung und eine aufwärts gerichtete Komponente aufweist und damit dicht unterhalb und verdeckt von der hinteren Dacheinheit liegen kann, beispielsweise seitlich der durchsichtigen Heckscheibe. Insbesondere kann die Drehbewegung dieser ersten Welle(n) über den Verlauf des vorgeordneten Dachteils in Richtung der vorderen Dacheinheit fortsetzbar sein, so dass sich die gesamte Dachbewegung über ihre Lage zu den flächigen Dachabschnitten nicht ändernde und damit nicht nach unten hervortretende drehbare Wellen bewirken lässt. Damit sind unterhalb der Dachaußenflächen keine sich um horizontale Achsen öffnenden Mehrgelenke, Gelenkparallelogramme oder ähnliches erforderlich. Eine Klemmgefahr ist gänzlich ausgeschlossen.

In dieser Ausbildung ist günstig die Drehbewegung der ersten Welle (n) einerseits in eine Schwenkbewegung zwischen der hinteren Dacheinheit und dem vorgeordneten Dachteil und andererseits gleichzeitig in eine Drehbewegung der Weiterführungswelle(n) übersetzbar. Somit ergibt sich ein verzögerungsfreier Bewegungsablauf aller Teile.

Für eine günstige Drehmomentübertragung sind an beiden Fahrzeugaußenseiten symmetrisch zwei im wesentlichen parallel unterhalb des vorgeordneten Dachteils gelegene Weiterführungswellen zu der vorderen Dacheinheit vorgesehen. Die Drehbewegung der Weiterführungswelle(n) kann je nach Fahrzeug in unterschiedliche Einklapp-, Schwenk- oder ähnliche Verlagerungsbewegungen übersetzbar sein, um verschiedenen Raumerfordernissen für das abgelegte Dach gerecht werden zu können. Zum Beispiel kann die Drehbewegung der Weiterführungswellen über ein nach oben öffnendes und daher die Kopffreiheit nicht beeinträchtigendes Mehrgelenk in eine Parallelverlagerung der vorderen Dacheinheit über das vorgeordnete Dachteil übersetzbar sein. Auch ein Abklappen der vorderen Dacheinheit nach unten kann möglich sein. Ebenso können mehrere vordere Dacheinheiten vorgesehen sein, um eine besonders lange Dacherstreckung zu erreichen.

Bei Verwendung von ersten Wellen für die Relativbewegung des vorgeordneten Dachteils und von zweiten, weiterführenden Wellen für die Relativbewegung der vorderen Dacheinheit ist eine raumsparende und effektive Kopplung einfach über ein dem oberen Bereich der hinteren Dacheinheit zugeordnetes räumliches Getriebe, insbesondere sphärisches Getriebe, das jeweils ein Kreuzgelenk umfassen kann, möglich.

Die Weiterführungswellen können sich von dort aus bei geschlossenem Dach nach vorne erstrecken und jeweils an einem Gelenk, insbesondere einem Kardangelenk, geteilt sein, so dass eine schräg liegende Achse des Kreuzgelenks am hinteren Ende dieser Welle in eine längsparallele Lage der Welle in ihrem vorderen Bereich übersetzbar ist.

Die gesamte Dachbewegung kann vorzugsweise durch nur einen Antrieb zeitgleich und zwangsgekoppelt ablaufen, ohne dass aufwendige weitere Steuerungs- oder Antriebsmittel erforderlich wären.

Insbesondere ergibt sich eine zuverlässige und nur über Schwenkverbindungen ohne die Gefahr von Verkantungen arbeitende Kinematik, wenn die hintere Dacheinheit zu ihrer Verlagerungsbewegung um eine quer zum Fahrzeug liegende erste Achse schwenkbar ist, das vorgeordnete Dachteil gegenüber dem hinteren Dachteil um eine parallel hierzu liegende zweite Achse schwenkbar ist und die ersten Wellen beide Schwenkachsen koppeln.

Vorteilhaft können die ersten Wellen derart abgekröpft sein, dass sie nicht geradlinig über die gesamte Höhe der hinteren Dacheinheit erstreckt sind, sondern die Drehmomentübertragung im mittleren Bereich durch die C-Säulen selbst erfolgt und diese nur oben und unten Achsstummel aufweisen, die ihre Drehachse umfassen und die dann nicht den Insassenraum stören.

Die abgekröpften Antriebswellen ermöglichen auch eine breite Heckscheibe, deren lichte Weite durch diese Wellen nicht eingeengt ist.

Wenn somit die ersten Wellen in Doppelfunktion auch als Drehachsen für seitlich einer Heckscheibe liegende C-Säulen des hinteren Dachteils dienen, können diese während der Dachöffnung eingedreht werden und liegen bei geöffnetem Dach oberhalb der Heckscheibe, so dass das Maß des abgelegten Dachpakets nach unten nicht vergrößert ist. Da das vorgeordnete Dachteil ohnehin in abgelegter Stellung gegenläufig zum hinteren Dachteil orientiert und gewölbt ist, steht für die eingeschwenkten C-Säulen genug Raum zur Verfügung, ohne dass die Dicke des abgelegten Dachpakets zunehmen müsste. Insbesondere können die C-Säulen in den Hohlraum zwischen gegenläufig gewölbten Dachteilen einschwenkbar sein. Das Dachpaket ist deutlich schmaler gegenüber festen C-Säulen, wodurch der Ablageraum des Daches verschmälert und die Randfuge eines Verdeckkastendeckels erheblich zur Fahrzeugmitte hin rücken kann, was die Designmöglichkeiten am Fahrzeug verbessert. Die Einschwenkbewegung der C-Säulen ist zudem über Drehachsen mit mechanisch geringem Aufwand möglich. Gleichzeitig ist das Paket der abgelegten Dachteile auch flacher, wodurch auch das Fahrzeugheck in optisch angenehmerem, flacherem Design ausgeführt sein kann.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine perspektivische, nach vorne und unten abge- brochene Ansicht eines schematisch angedeuteten erfindungsgemäßen Cabriolet-Fahrzeugs von schräg hinten bei geschlossenem Dach,

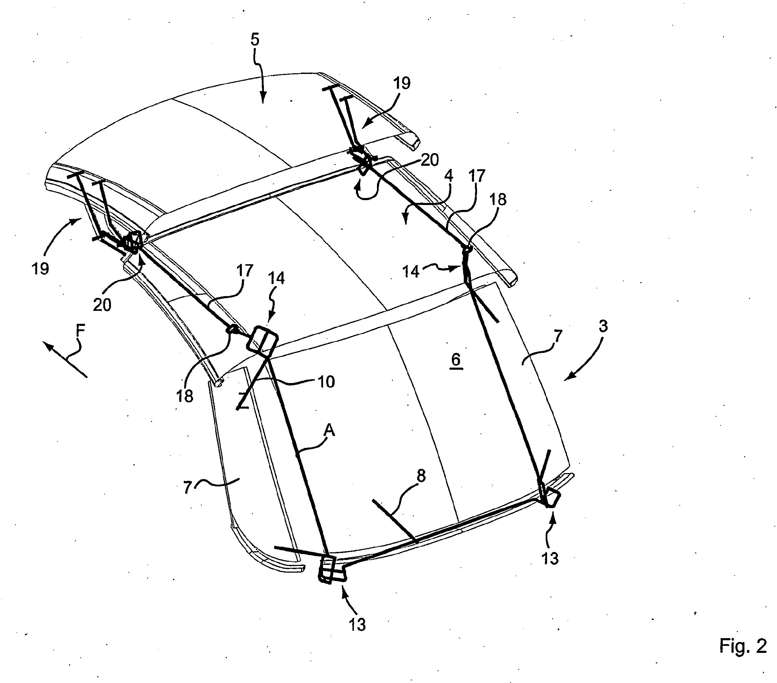

- Fig. 2: das Dach nach Fig. 1 aus ähnlicher Perspektive während der beginnenden Dachöffnung mit nach in- nen eindrehenden C-Säulen,

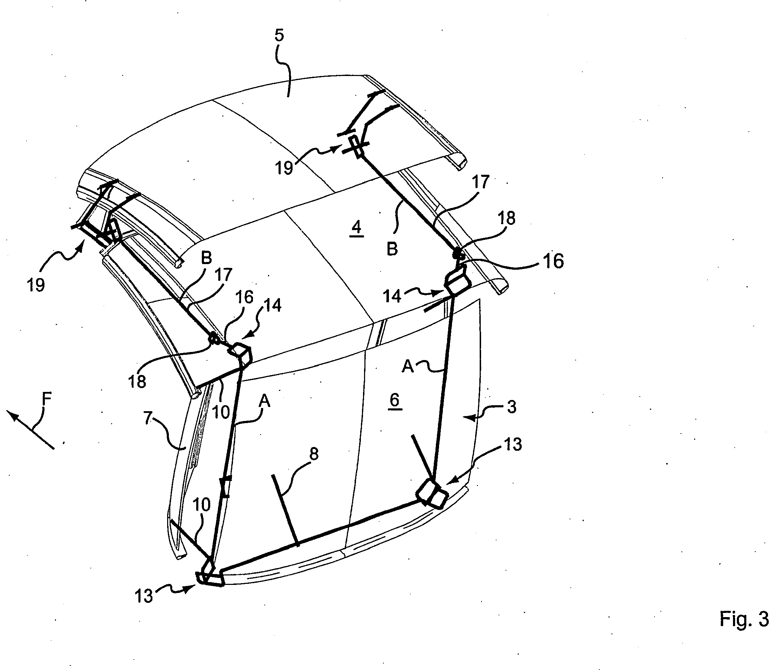

- Fig. 3: eine ähnliche Ansicht wie Fig. 2 bei weiter fortschreitender Dachöffnung während des Ab- senkens der hinteren Dacheinheit und einer nach oben über das vorgeordnete Dachteil verlagernden vorderen Dacheinheit,

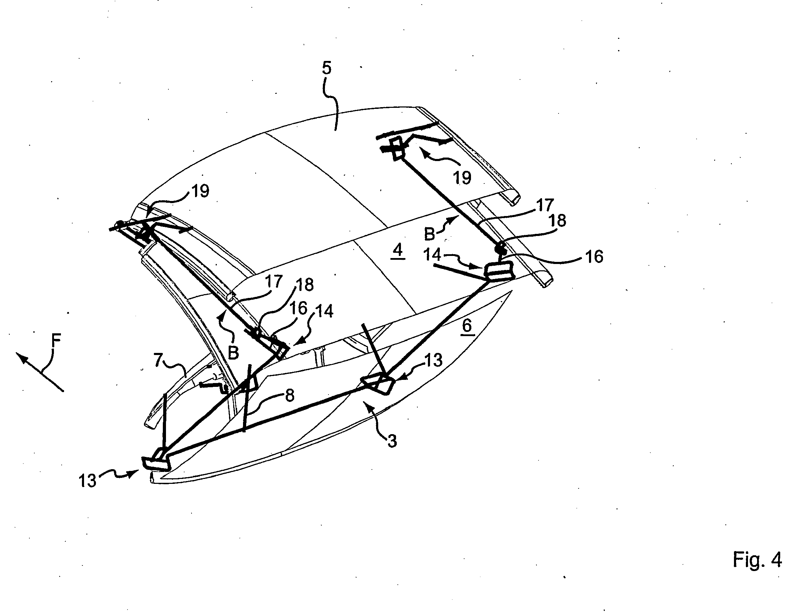

- Fig. 4: eine ähnliche Ansicht wie Fig. 3 in fortge- schrittener Ablagestellung des Daches,

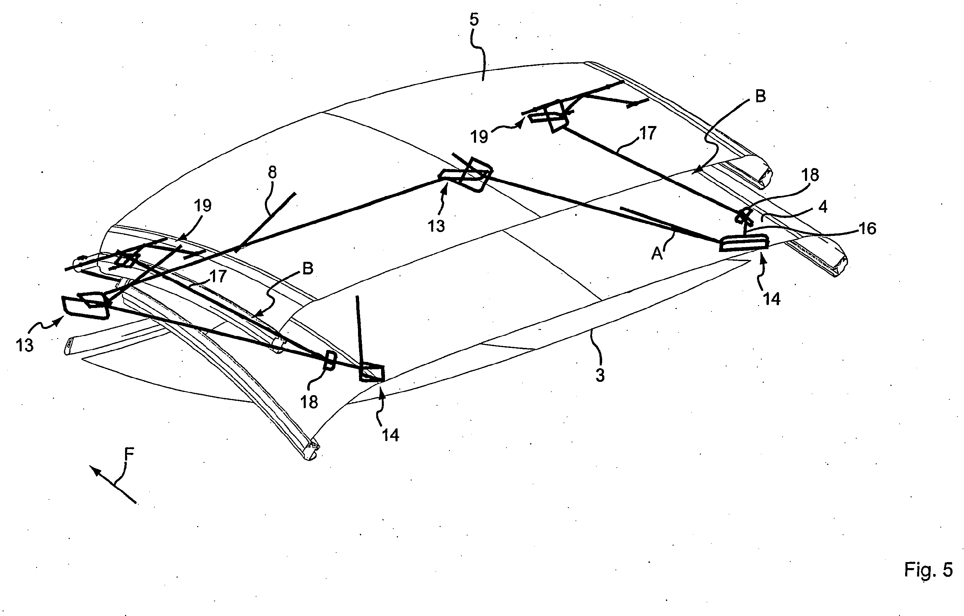

- Fig. 5: eine ähnliche Ansicht wie Fig. 4 bei vollständig geöffnetem Dach,

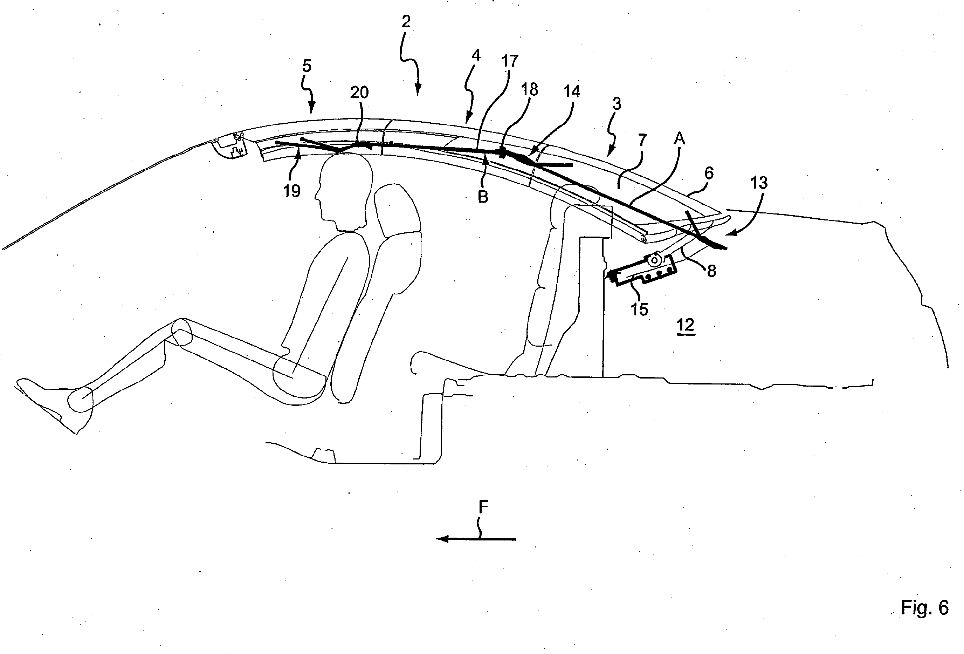

- Fig. 6: das Fahrzeug in geschlossener Dachstellung nach Fig. 1 in Seitenansicht,
- Fig. 7: das Fahrzeug etwa in Dachstellung nach Fig. 2 in Seitenansicht,
- Fig. 8: das Fahrzeug etwa in Dachstellung nach Fig. 3 in Seitenansicht,

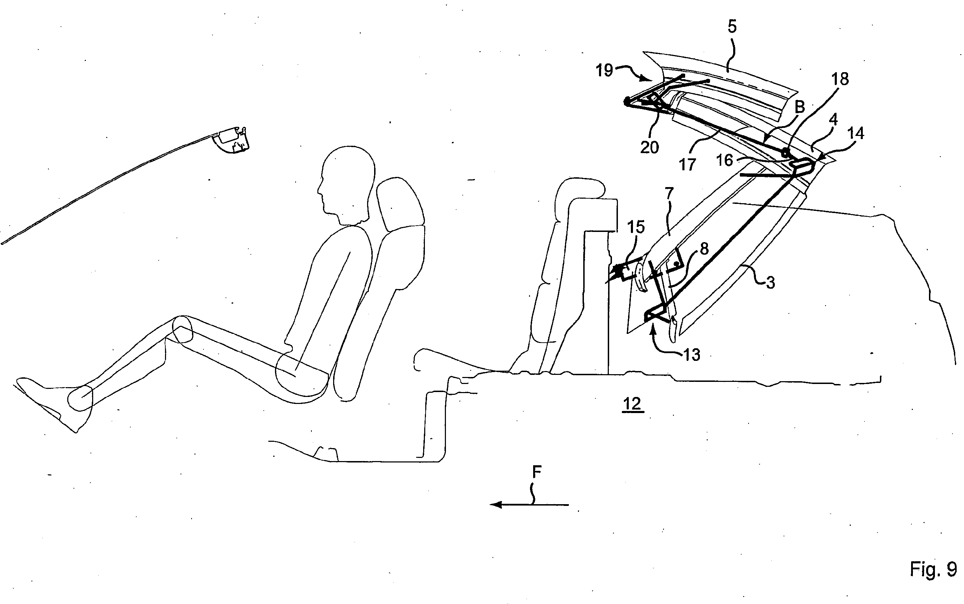

- Fig. 9: das Fahrzeug etwa in Dachstellung nach Fig. 4 in Seitenansicht,

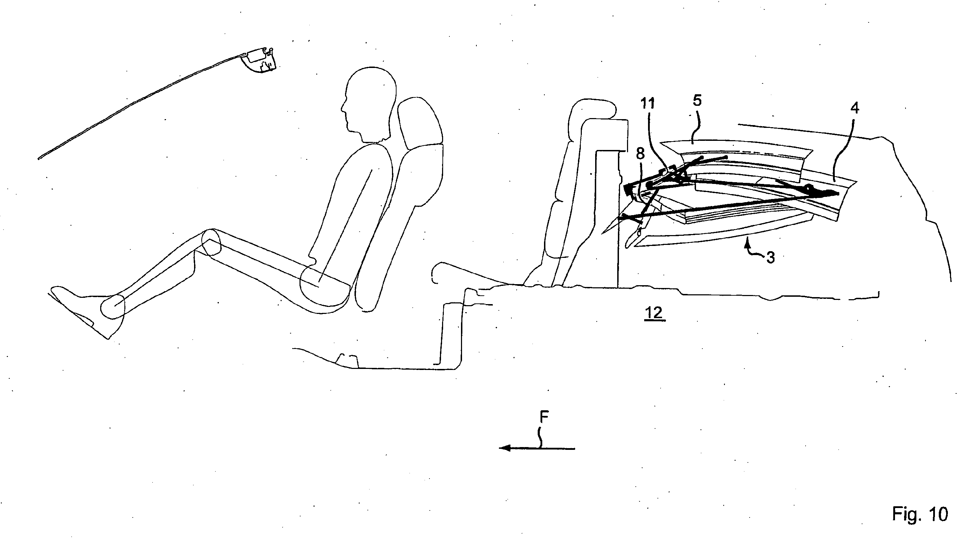

- Fig. 10: das Fahrzeug etwa in Dachstellung nach Fig. 5 in Seitenansicht,

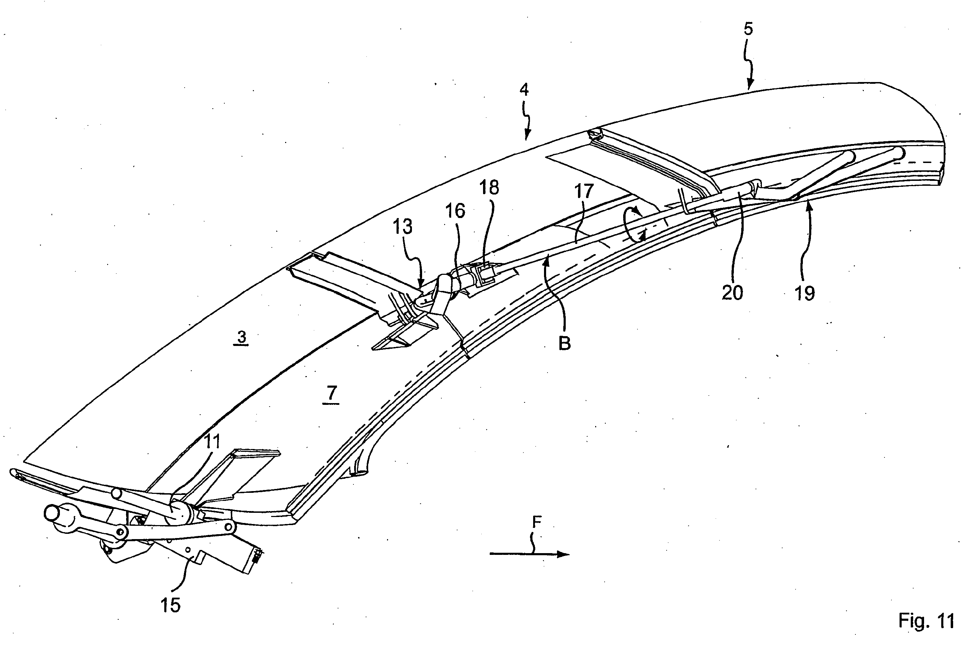

- Fig. 11: eine leicht perspektivische Ansicht von innen in das geschlossene Dach.

Das erfindungsgemäße Cabriolet-Fahrzeug 1 umfasst im hier dargestellten Ausführungsbeispiel insgesamt drei bei geschlossenem Dach 2 bezüglich der Fahrtrichtung F aufeinander folgende und voneinander getrennte Dachabschnitte 3, 4, 5, nämlich die hintere Dacheinheit 3, die im bezüglich der Fahrzeugquerrichtung mittleren Bereich 9 eine Heckscheibe 6 und seitlich außen gegenüber dieser separate C-Säulen 7 umfasst, sowie das dieser vorgeordnete und hier eine durchgehende Außenfläche aufweisende vorgeordnete Dachteil 4 und die hier ebenfalls mit einer durchgehenden Außenfläche versehene vordere Dacheinheit 5.

Die vordere Dacheinheit 5 und/oder das vorgeordnete Dachteil 4 könnte beispielsweise auch noch ein Hub- oder Schiebedach enthalten. Auch sind hintereinander mehrere vordere Dacheinheiten möglich, so dass dann insgesamt zum Beispiel vier oder fünf Dachabschnitte aufeinander folgen. Das erfindungsgemäße Cabriolet-Fahrzeug 1 kann sowohl ein Zweisitzer sein als auch insbesondere einen größeren Insassenraum mit zwei oder sogar mehr Sitzreihen hintereinander umfassen.

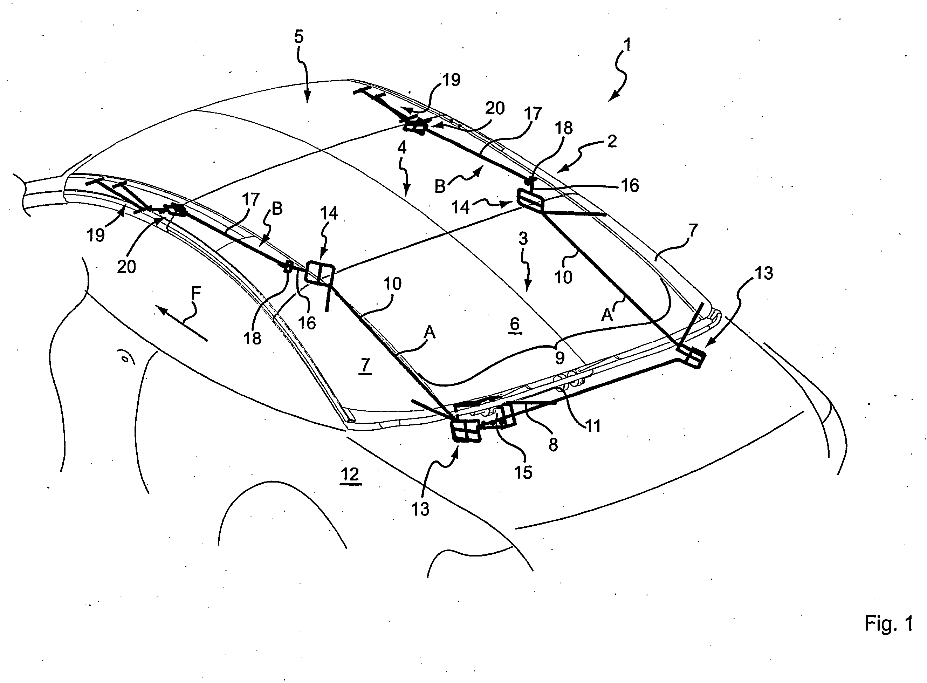

Die hintere Dacheinheit 3 ragt in geschlossener Stellung schräg aufwärts. Das Dachteil 4 ist dem hinteren Dachteil 3 in geschlossener Stellung (Fig. 1) vorgeordnet und liegt im wesentlichen horizontal oberhalb des Insassenraums, ebenso wie die vordere Dacheinheit 5.

Die Dachabschnitte 3, 4, 5 sind hier an ihren Außenflächen voneinander getrennt und im wesentlichen aus starren Teilen gebildet, umfassen zumindest starre Rahmen, über die teilweise ein Bezug gespannt sein kann.

Die hintere Dacheinheit 3 ist im Ausführungsbeispiel über ihre Höhenerstreckung geteilt und umfasst außer dem mittleren Bereich 9 mit der Heckscheibe 6 zumindest im wesentlichen seitlich neben diesem gelegene und gegenüber der Heckscheibe 6 bewegliche C-Säülen 7. Diese können auch Querausleger oder ähnliches umfassen, die sich ober- oder unterhalb der Heckscheibe 6 in Richtung einer vertikalen Längsmittelebene erstrecken.

Die C-.Säulen 7 sind hier bei der Dachöffnung gegenüber dem mittleren Abschnitt mit der Heckscheibe 6 des Dachteils 3 um Drehachsen 10 einschwenkbar, die zumindest teilweise gleichzeitig erste Antriebswellen A für das Einschwenken des vorgeordneten Dachteils 4 gegenüber dem hinteren Dachteil 3 bilden und die bei geschlossenem Dach 2 jeweils zumindest eine Komponente in Fahrtrichtung F und eine aufwärts gerichtete Komponente aufweisen. In den hier gezeigten Ausführungsbeispielen liegen die Drehachsen 10 im wesentlichen parallel zur Erstreckungsebene des hinteren Dachteils 3 und parallel zu den seitlichen Rändern der Heckscheibe 6, was nicht zwingend ist. In der Zeichnung sind die Drehachsen 10 durch die C-Säulen 7 geführt, die Linie der Antriebswellen A ist als theoretische Wirklinie durchgehend gezeichnet, ohne deswegen separat zu den Drehachsen 10 ausgebildet sein zu müssen.

Es ist alternativ zu den eindrehbaren C-Säulen 7 auch möglich, die C-Säulen 7 gegenüber dem mittleren Bereich 9 nicht separat einschwenkbar zu gestalten und dennoch erste Antriebswellen A vorzusehen. In dieser Ausbildung hätte die hintere Dacheinheit 3 in abgelegter Stellung ihre volle Breite, die Antriebswellen A würden ohne das Eindrehen der C-Säulen dann nur die Relativbewegung der Dachabschnitte 3, 4, 5 gegeneinander bewirken und nicht gleichzeitig die Funktion von Drehachsen erfüllen.

Zur Dachöffnung ist die hintere Dacheinheit 3 heckwärts und abwärts verlagerbar und das vorgeordnete Dachteil 4 an die hintere Dacheinheit 3 heranschwenkbar.

Die Verlagerung des hinteren Dachteils 3 erfolgt um eine horizontale und quer zum Fahrzeug 1 liegende erste Schwenkachse 11, die bezüglich der Karosserie 12 ortsfest oder während der Öffnung verlagerbar sein kann. Die Ablagebewegung kann auch eine überlagerte Bewegung mit translatorischen und rotatorischen Anteilen auf einer Kreisbahn oder anderen Kurve sein. Im Ausführungsbeispiel ist die Achse 11 ortsfest bezüglich der Karosserie 12. Die hintere Dacheinheit 3 ist über einen von der Achse 11 ausgreifenden Hebel 8 mit dieser Achse 11 verbunden und um diese schwenkbar.

Das Heranschwenken des vorgeordneten Dachteiles 4 an die hintere Dacheinheit 3 erfolgt um eine zweite, mit dieser bewegbare obere horizontale Schwenkachse im Bereich der Trennfuge zwischen den Dachabschnitten 3 und 4 und ist über die Antriebswellen A vermittelbar. Die Schwenkbewegung der hinteren Dacheinheit 3 ist über zwei seitliche oder einen zentralen Antrieb(e) 15 bewirkbar, der oder die auch alle Relativbewegungen der Dachabschnitte 3, 4, 5 gegeneinander bewirkt oder bewirken. Insbesondere kann ein einziger Antrieb 15 an einem zentralen Hauptlager genügen. Der Antrieb 15 kann - wie hier - mitbewegt sein und primär das Einschwenken der hinteren Dacheinheit 3 um die Achse 11 bewirken.

Die vordere Dacheinheit 5 ist beim Dachöffnen parallel über das Dachteil 4 verlagerbar. Alternativ kann beispielsweise auch ein Verlagern der vorderen Dacheinheit 5 unter das Dachteil 4 oder ein Einklappen nach unten oder oben möglich sein.

Um die horizontale erste Schwenkachse 11 schwenken beim Dachöffnen oder -schließen zwei die ersten Antriebswellen A kreuzende und seitlich liegende untere räumliche Getriebe 13. Diese sind in den Ausführungsbeispielen als sphärische Kreuzgelenke ausgebildet, was nicht zwingend, jedoch mechanisch besonders einfach und in der Funktion zuverlässig ist. Die ersten Antriebswellen A verlaufen, von diesen ausgehend, parallel zur Erstreckung der hinteren Dacheinheit 3 schräg aufwärts und im obersten und untersten Bereich deckungsgleich mit den Drehachsen 10, um die die hier separat schwenkbaren C-Säulen 7 eindrehbar sind. Dabei werden während der Dachöffnung die C-Säulen 7 um die Achsen 10 derart gegenüber dem mittleren Abschnitt 9 eingeschwenkt, dass sie in geöffneter Dachstellung zwischen den Dachteilen 3, 4 und dabei gleichsinnig zum vorgeordneten Dachteil 4 und zur vorderen Dacheinheit 5 gewölbt liegen. Da die Dachteile 3, 4 ohnehin in abgelegter Stellung gegensinnig gekrümmt zueinander liegen, kann der dazwischen entstehende Hohlraum ohne weiteren Raumverlust sehr vorteilhaft für die einschwenkenden C-Säulen 7 genutzt werden.

Im Bereich der Trennfuge zwischen den Dachabschnitten 3 und 4 liegen als obere sphärische Getriebe Kreuzgelenke 14, die bei der Dachöffnung die Drehbewegung der beiden ersten Antriebswellen A einerseits in eine Heranschwenkbewegung des vorgeordneten Dachteils 4 an die hintere Dacheinheit 3 um die obere Schwenkachse und andererseits in eine Drehbewegung von zur vorderen Dacheinheit 5 überleitenden Weiterführungswellen B übersetzen. Diese liegen bei geschlossenem Dach 2 dicht unterhalb des vorgeordneten Dachteils 4 und im wesentlichen parallel zu diesem. Mit deren Hilfe ist eine Relativbewegung der vorderen Dacheinheit 5 gegenüber dem vorgeordneten Dachteil 4 bewirkbar. Im Ausführungsbeispiel ist an jeder Fahrzeugquerseite genau eine Weiterführungswelle B vorgesehen.

Jede dieser beiden Weiterführungswellen weist eine Komponente in Fahrtrichtung F auf. Hier liegen die oberen Kreuzgelenke 14 derart, dass ein hinterer Teil 16 jeder Weiterführungswelle B schräg nach außen weist und dann in ein Kardangelenk 18 einmündet, von dem aus der vordere Teil 17 der Weiterführungswelle B im wesentlichen in Fahrzeuglängsrichtung verläuft.

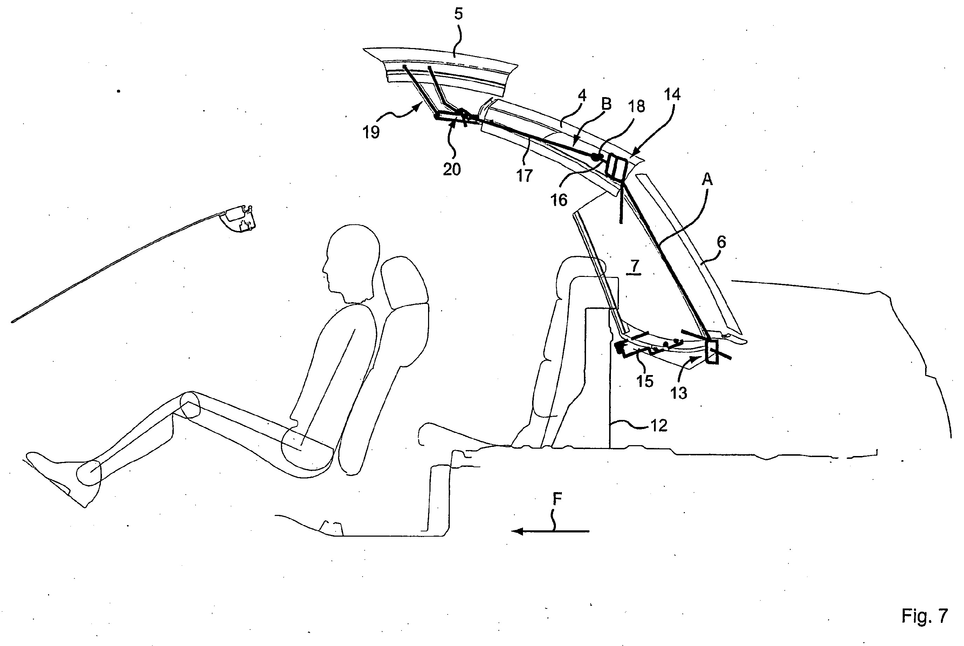

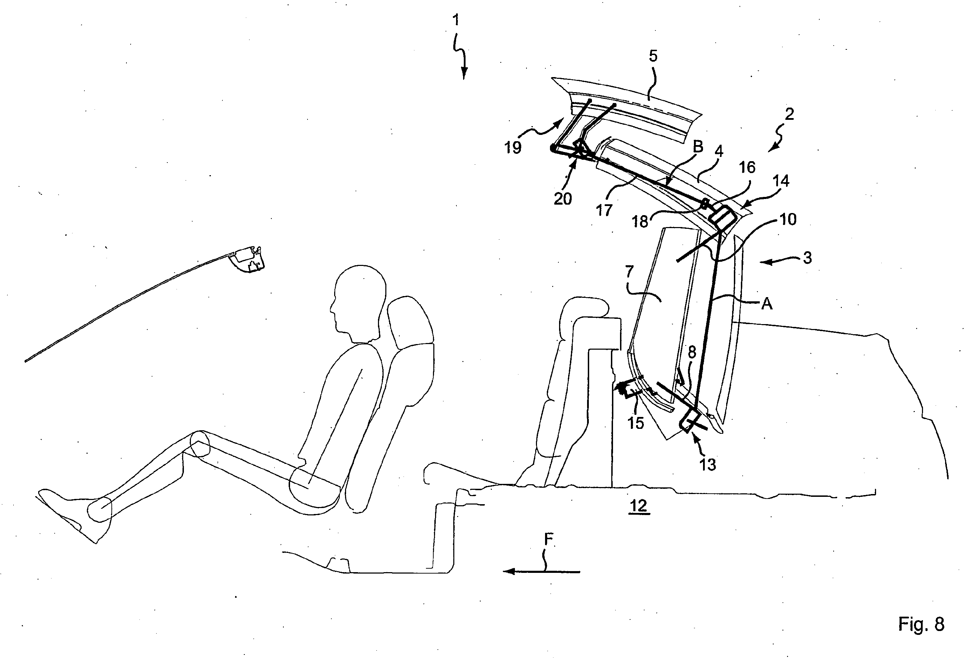

Dabei wird die Drehbewegung der Weiterführungswellen B zur Ansteuerung jeweils eines nach oben öffnenden Mehrgelenks 19 zwischen den Dachabschnitten 4 und 5 umgesetzt, mit dessen Hilfe die Drehbewegung in eine Parallelverlagerung der vorderen Dacheinheit 5 über das vorgeordnete Dachteil 4 übersetzbar ist. Das Mehrgelenk 19 ist dabei über ein weiteres Kreuzgelenk 20 von dem vorderen Abschnitt 17 der Weiterführungswelle B bewegbar und hier als nach oben öffnendes Viergelehk ausgebildet (Fig. 7, Fig. 8).

Das gesamte bewegliche Dach 2 kann vor Einbau in den Rohbau auf Funktion getestet werden; die so fertig eingestellte modulare Einheit kann dann an den Rohbau angeliefert und montiert werden.

Die Erfindung ist sowohl bei Fahrzeugen mit manuell zu bewegenden Dächern auch insbesondere bei voll- oder teilautomatischer Beweglichkeit des Daches 2 anwendbar. Auch ist es möglich, dass an Stelle der ersten Antriebswellen A zum Beispiel ein Schwenkparallelogramm vorgesehen ist, dessen Bewegung dann über im oberen Bereich anschließende Weiterführungswellen B in die Relativbewegung der vorderen Dacheinheit 5 zum vorgeordneten Dachteil 4 übersetzt wird. Die Lösung mit hinteren Wellen A und Weiterführungswellen B ist jedoch besonders raumsparend und unauffällig, sichert einen flüssigen Bewegungsablauf und ist konstruktiv sowie sicherheitstechnisch vorteilhaft.

## Patentansprüche

1. Cabriolet-Fahrzeug (1) mit einer hinteren, eine Heckscheibe (6) umfassenden Dacheinheit (3) und einem ersten, in geschlossener Dachstellung bezüglich der Fahrtrichtung (F) diesem vorgeordneten Dachteil (4), wobei zur Dachöffnung die hintere Dacheinheit (3) zumindest im wesentlichen heckwärts und abwärts verlagerbar und das vorgeordnete Dachteil (4) an die hintere Dacheinheit (3) heranbewegbar ist und wobei an das vorgeordnete Dachteil (4) bei geschlossenem Dach (2) in Fahrtrichtung F zumindest eine vordere Dacheinheit (5) anschließt, die bei Dachöffnung gegenüber dem vorgeordneten Dachteil (4) relativbeweglich ist,
**dadurch gekennzeichnet,**
**dass** die Relativbewegung der vorderen Dacheinheit (5) mit Hilfe zumindest einer bei geschlossenem Dach (2) im wesentlichen oder vollständig unterhalb des vorgeordneten Dachteils (4) liegenden drehbaren Welle (B) bewirkbar ist.

2. Cabriolet-Fahrzeug (1) nach Anspruch 1,
**dadurch gekennzeichnet,**
**dass** zur Bewirkung des Heranbewegens des vorgeordneten Dachteils (4) an die hintere Dacheinheit (3) zumindest eine erste Welle (A) vorgesehen ist, die bei geschlossenem Dach (2) zumindest eine Komponente in Fahrtrichtung (F) und eine aufwärts gerichtete Komponente aufweist, wobei die Drehbewegung der Welle(n) (A) über den Verlauf des vorgeordneten Dachteils (4) in Richtung der vorderen Dacheinheit (5) mittels der Weiterführungswelle(n) (B) fortsetzbar ist und darüber deren Relativbewegung gegenüber dem vorgeordneten Dachteil (4) bewirkbar ist.

3. Cabriolet-Fahrzeug (1) nach einem der Ansprüche 1 oder 2,
**dadurch gekennzeichnet,**
**dass** zur Bewirkung der Relativbewegung der vorderen Dacheinheit (5) zwei im wesentlichen parallel unterhalb des vorgeordneten Dachteils (4) gelegene Weiterführungswellen (B) vorgesehen sind.

4. Cabriolet-Fahrzeug (1) nach einem der Ansprüche 1 bis 3,
**dadurch gekennzeichnet,**
**dass** die Drehbewegung der ersten Welle(n) (A) in eine Schwenkbewegung zwischen der hinteren Dacheinheit (3) und dem vorgeordneten Dachteil (4) und gleichzeitig in eine Drehbewegung der Weiterführungswelle(n) (B) übersetzbar ist.

5. Cabriolet-Fahrzeug (1) nach einem der Ansprüche 1 bis 4,
**dadurch gekennzeichnet,**
**dass** die Drehbewegung der Weiterführungswelle(n) (B) in eine Parallelverlagerung der vorderen Dacheinheit (5) über das vorgeordnete Dachteil (4) übersetzbar ist.

6. Cabriolet-Fahrzeug (1) nach einem der Ansprüche 1 bis 5,
**dadurch gekennzeichnet,**
**dass** die vordere Dacheinheit (5) über ein nach oben öffnendes Mehrgelenk (19) mit dem vorgeordneten Dachteil (4) verbunden ist.

7. Cabriolet-Fahrzeug (1) nach einem der Ansprüche 1 bis 6.
**dadurch gekennzeichnet,**
**dass** zur Übersetzung der Drehbewegung der ersten Welle (A) in die Heranschwenkbewegung zwischen der hinteren Dacheinheit (3) und dem vorgeordneten Dachteil (4) ein oberes räumliches Getriebe (14) angeordnet ist.

8. Cabriolet-Fahrzeug (1) nach Anspruch 7,
**dadurch gekennzeichnet,**
**dass** zwei den äußeren Fahrzeugquerseiten zugeordnete Weiterführungswellen (B) mit jeweils einer bei geschlossenem Dach (2) in Fahrtrichtung weisenden Komponente vorgesehen sind, die von jedem oberen räumlichen Getriebe (14) ausgehen.

9. Cabriolet-Fahrzeug (1) nach Anspruch 8,
**dadurch gekennzeichnet,**
**dass** jede Weiterführungswelle (B) an einem Gelenk (18) geteilt ist und in einem vorderen Bereich (17) in Fahrzeuglängsrichtung verläuft.

10. Cabriolet-Fahrzeug (1) nach einem der Ansprüche 1 bis 9,
**dadurch gekennzeichnet,**
**dass** zum Antrieb der Drehbewegung der ersten Welle (A) ein unteres räumliches Getriebe (13) vorgesehen ist, das eine Verlagerungsbewegung der hinteren Dacheinheit (3) um eine quer zum Fahrzeug (1) liegende erste Achse (11) in die Drehbewegung der ersten Welle (A) übersetzt und darüber eine Schwenkbewegung des vorgeordneten Dachteils (4) gegenüber der hinteren Dacheinheit (3) um eine parallel zur ersten Achse (11) liegende zweite Achse angekoppelt ist.

11. Cabriolet-Fahrzeug (1) nach einem der Ansprüche 1 bis 10,
**dadurch gekennzeichnet,**
**dass** zur Bewegung der hinteren Dacheinheit (3) um eine quer zum Fahrzeug (1) liegende erste Achse (11), des vorgeordneten Dachteils (4) um eine zweite Achse, zur Relativbewegung der vorderen Dacheinheit (5) und zur Drehbewegung der ersten Welle (n) (A) sowie der Weiterführungswelle(n) (B) ein einziger Antrieb (15) vorgesehen ist, der zur Bewirkung der Bewegung der hinteren Dacheinheit (3) um eine quer zum Fahrzeug (1) liegende erste Achse (11) dient.

12. Cabriolet-Fährzeug (1) nach einem der Ansprüche 7 bis 11,
**dadurch gekennzeichnet,**
**dass** die oberen und/oder die unteren räumlichen Getriebe (13;14) jeweils zumindest ein Kreuzgelenk umfassen.

13. Cabriolet-Fahrzeug,(1) nach einem der Ansprüche 1 bis 12,
**dadurch gekennzeichnet,**
**dass** die oder jede erste Welle (A) parallel zur Erstreckungsebene der hinteren Dacheinheit (3) liegt.

14. Cabriolet-Fahrzeug (1) nach einem der Ansprüche 1 bis 13,
**dadurch gekennzeichnet,**
**dass** die ersten Wellen (A) abgekröpfte Enden aufweisen und über einen mittleren Teil ihrer Erstreckung im hinteren Dachteil in seitlich einer Heckscheibe (6) liegenden C-Säulen (7) verlaufen.

15. Cabriolet-Fahrzeug (1) nach Anspruch 14,
**dadurch gekennzeichnet,**
**dass** die C-Säulen (7) durch die Drehbewegung der Wellen (A) um deren Drehachsen (10) bei der Dachöffnung gegenüber der Heckscheibe (6) einschwenkbar und in geöffneter Dachstellung zwischen den Dachteilen (3;4) halterbar sind.

16. Bewegliches Fahrzeugdach (2) für ein Cabriolet-Fahrzeug (1) nach einem der Ansprüche 1 bis 15.

## Claims

1. A convertible vehicle (1) with a rear roof unit (3) comprising a rear window (6) and with a first roof part (4) which is arranged in front of the rear roof unit (3) with respect to the direction of travel (F) when the roof is closed, wherein in order to open the roof, the rear roof unit (3) is displaceable at least substantially rearwards and downwards and the frontally arranged roof part (4) can be moved towards the rear roof unit (3), and wherein at least one front roof unit (5) adjoins the frontally arranged roof part (4) in the direction of travel F when the roof (2) is closed, said front roof unit (5) being movable relative to said frontally arranged roof part (4) when opening the roof,
**characterised in that** the relative movement of the front roof unit (5) can be effected by at least one rotary shaft (B) which is located substantially or completely below the frontally arranged roof part (4) when the roof (2) is closed.

2. The convertible vehicle (1) according to claim 1, **characterised in that**, in order to effect the movement of the frontally arranged roof part (4) towards the rear roof unit (3), at least one first shaft (A) is provided which, when the roof (2) is closed, comprises at least one component in the direction of travel (F) and one upwardly orientated component, and the rotary movement of the shaft(s) (A) can be continued over the extent of the frontally arranged roof part (4) in the direction of the front roof unit (5) by means of the continuation shaft(s) (B), thereby allowing the relative movement of the front roof unit (5) with respect to the frontally arranged roof part (4).

3. The convertible vehicle (1) according to any one of claims 1 or 2, **characterised in that**, in order to effect the relative movement of the front roof unit (5), two continuation shafts (B) are provided, which are arranged substantially parallel below the frontally arranged roof part (4).

4. The convertible vehicle (1) according to any one of claims 1 to 3, **characterised in that** the rotary movement of the first shaft(s) (A) can be converted into a pivoting movement between the rear roof unit (3) and the frontally arranged roof part (4) and, at the same time, into a rotary movement of the continuation shaft(s) (B).

5. The convertible vehicle (1) according to any one of claims 1 to 4, **characterised in that** the rotary movement of the continuation shaft(s) (B) can be converted into a parallel displacement of the front roof unit (5) over the frontally arranged roof part (4).

6. The convertible vehicle (1) according to any one of claims 1 to 5, **characterised in that** the front roof unit (5) is connected to the frontally arranged roof part (4) by an upwardly opening multiple joint (19).

7. The convertible vehicle (1) according to any one of claims 1 to 6, **characterised in that** an upper spatial gear (14) is provided for conversion of the rotary movement of the first shaft (A) into the pivoting movement between the rear roof unit (3) and the frontally arranged roof part (4).

8. The convertible vehicle (1) according to claim 7, **characterised in that** two continuation shafts (B) assigned to the outer transverse vehicle sides are provided, each having a component directed in the direction of travel when the roof (2) is closed, which extend from each upper spatial gear (14).

9. The convertible vehicle (1) according to claim 8, **characterised in that** each continuation shaft (B) is divided at a joint (18) and extends in the longitudinal vehicle direction in a front section (17).

10. The convertible vehicle (1) according to any one of claims 1 to 9, **characterised in that**, in order to drive the rotary movement of the first shaft (A), a lower spatial gear (13) is provided which converts a displacement movement of the rear roof unit (3) about a first axis (11), which is transverse to the vehicle (1), into the rotary movement of the first shaft (A) and, coupled therewith, a pivoting movement of the frontally arranged roof part (4) relative to the rear roof unit (3) about a second axis which is parallel to the first axis (11).

11. The convertible vehicle (1) according to any one of claims 1 to 10, **characterised in that** a single drive (15) is provided for the movement of the rear roof unit (3) about a first axis (11) which is transverse to the vehicle (1), for the movement of the frontally arranged roof part (4) about a second axis, for the relative movement of the front roof unit (5) and for the rotary movement of the first shaft(s) (A) as well as of the continuation shaft(s) (B), said drive (15) serving to cause the movement of the rear roof unit (3) about a first axis (11) which is transverse to the vehicle (1).

12. The convertible vehicle (1) according to any one of claims 7 to 11, **characterised in that** the upper and/or the lower spatial gears (13; 14) each comprise at least one universal joint.

13. The convertible vehicle (1) according to any one of claims 1 to 12, **characterised in that** the or each first shaft (A) extends parallel to the plane in which the rear roof unit (3) extends.

14. The convertible vehicle (1) according to any one of claims 1 to 13, **characterised in that** the first shafts (A) have offset ends and extend over a central part of their extension in C pillars (7) disposed to the side of a rear window (6).

15. The convertible vehicle (1) according to claim 14, **characterised in that** the C pillars (7) can be pivoted in with respect to the rear window (6) by the rotary movement of the shafts (A) about their axes of rotation (10) during the roof opening and can be fixed in the opened roof position between the roof parts (3; 4).

16. A moveable vehicle roof (2) for a cabriolet vehicle (1) according to any one of claims 1 to 15.

## Revendications

1. Véhicule cabriolet (1) avec un module de toit arrière (3) comprenant une lunette arrière (6) et avec un premier élément de toit (4) disposé en amont du module de toit arrière (3) par rapport au sens de la marche (F) lorsque le toit est fermé, étant précisé que, pour l'ouverture du toit, le module de toit arrière (3) peut être déplacé au moins sensiblement vers l'arrière et vers le bas et l'élément de toit (4) disposé en amont peut être approché contre le module de toit arrière (3), et qu'au moins un module de toit avant (5) suit l'élément de toit (4) disposé en amont, lorsque le toit (2) est fermé, dans le sens de la marche F, ledit module de toit avant (5) pouvant réaliser, lors de l'ouverture du toit, un mouvement relatif par rapport audit élément de toit (4) disposé en amont,
**caractérisé en ce que** le mouvement relatif du module de toit avant (5) peut s'effectuer au moyen d'au moins un arbre rotatif (B) disposé sensiblement ou complètement au-dessous de l'élément de toit (4) disposé en amont lorsque le toit (2) est fermé.

2. Véhicule cabriolet (1) selon la revendication 1, **caractérisé en ce que**, pour l'approchement de l'élément de toit (4) disposé en amont contre le module de toit arrière (3), il est prévu au moins un premier arbre (A) qui, lorsque le toit (2) est fermé, présente au moins une composante dans le sens de la marche (F) et une composante orientée vers le haut et dont le mouvement rotatif peut être continu sur l'étendue de l'élément de toit (4) disposé en amont dans le sens du module de toit avant (5) au moyen de l'arbre ou des arbre(s) de continuation (B), permettant ainsi le mouvement relatif du module de toit avant (5) par rapport à l'élément de toit (4) disposé en amont.

3. Véhicule cabriolet (1) selon l'une quelconque des revendications 1 ou 2, **caractérisé en ce que** l'on prévoit pour le mouvement relatif du module de toit avant (5) deux arbres de continuation (B) qui sont sensiblement parallèles au-dessous de l'élément de toit (4) disposé en amont.

4. Véhicule cabriolet (1) selon l'une quelconque des revendications 1 à 3, **caractérisé en ce que** le mouvement rotatif dudit (desdits) premier(s) arbre(s) (A) peut être converti en un mouvement de pivotement entre le module de toit arrière (3) et l'élément de toit (4) disposé en amont et, en même temps, en un mouvement rotatif de l'arbre ou des arbres de continuation (B).

5. Véhicule cabriolet (1) selon l'une quelconque des revendications 1 à 4, **caractérisé en ce que** le mouvement rotatif de l'arbre ou des arbres de continuation (B) peut être converti en un déplacement parallèle du module de toit avant (5) au-dessus de l'élément de toit (4) disposé en amont.

6. Véhicule cabriolet (1) selon l'une quelconque des revendications 1 à 5, **caractérisé en ce que** le module de toit avant (5) est relié à l'élément de toit (4) disposé en amont par un joint multiple (19) s'ouvrant vers le haut.

7. Véhicule cabriolet (1) selon l'une quelconque des revendications 1 à 6, **caractérisé en ce que** l'on prévoit un engrenage spatial supérieur (14) pour la conversion du mouvement rotatif du premier arbre (A) en le mouvement de pivotement entre le module de toit arrière (3) et l'élément de toit (4) disposé en amont.

8. Véhicule cabriolet (1) selon la revendication 7, **caractérisé en ce que** l'on prévoit deux arbres de continuation (B), associés aux côtés transversaux extérieurs du véhicule, chacun d'entre eux présentant une composante dans le sens de la marche, lorsque le toit (2) est fermé, qui partent de chaque engrenage spatial supérieur (14).

9. Véhicule cabriolet (1) selon la revendication 8, **caractérisé en ce que** chaque arbre de continuation (B) est divisé au niveau d'un joint (18) et s'étend en direction longitudinale du véhicule dans une zone avant (17).

10. Véhicule cabriolet (1) selon l'une quelconque des revendications 1 à 9, **caractérisé en ce que** l'on prévoit, pour l'entraînement en rotation du premier arbre (A), un engrenage spatial inférieur (13) pour la conversion d'un mouvement de déplacement du module de toit arrière (3) autour d'un premier axe (11) transversale au véhicule (1) en un mouvement rotatif du premier arbre (A) et, par ce moyen, un mouvement de pivotement de l'élément de toit (4) disposé en amont par rapport au module de toit arrière (3) autour d'un deuxième axe parallèle au premier axe (11).

11. Véhicule cabriolet (1) selon l'une quelconque des revendications 1 à 10, **caractérisé en ce que**, pour le mouvement du module de toit arrière (3) autour d'un premier axe (11) disposé transversalement au véhicule (1), pour le mouvement de l'élément de toit (4) disposé en amont autour d'un deuxième axe, pour le mouvement relatif du module de toit avant (5) et pour le mouvement rotatif du ou des premier(s) arbre(s) (A) ainsi que de l'arbre ou des arbres de continuation (B), il est prévu un seul entraînement (15) qui permet d'effectuer le mouvement du module de toit arrière (3) autour d'un premier axe (11) disposé transversalement au véhicule (1).

12. Véhicule cabriolet (1) selon l'une quelconque des revendications 7 à 11, **caractérisé en ce que** les engrenages spatiaux supérieurs et/ou inférieurs (13; 14) comprennent au moins un joint universel.

13. Véhicule cabriolet (1) selon l'une quelconque des revendications 1 à 12, **caractérisé en ce que** le ou chaque premier arbre (A) est parallèle au plan d'extension du module de toit arrière (3).

14. Véhicule cabriolet (1) selon l'une quelconque des revendications 1 à 13, **caractérisé en ce que** les premiers arbres (A) présentent des extrémités coudées et s'étendent, sur une partie centrale de leur extension, dans le module de toit arrière, dans des montants C (7) disposés sur les côtés d'une lunette arrière (6).

15. Véhicule cabriolet (1) selon la revendication 14, **caractérisé en ce que** les montants C (7) peuvent être pivotés vers l'intérieur par rapport à la lunette arrière (6), par le mouvement rotatif des arbres (A) autour de leurs axes de rotation (10), lors de l'ouverture du toit, et peuvent être maintenus entre les éléments de toit (3; 4) en position de l'ouverture du toit.

16. Toit de véhicule (2) mobile pour un véhicule de cabriolet (1) selon l'une quelconque des revendications 1 à 15.
